# EUROPEAN PATENT APPLICATION

(11) **EP 4 387 355 A1**
(43) Date of publication of application: **19.06.2024**
(21) Application number: 22860243.9
(22) Date of filing: 09.08.2022
(51) Int. Cl.: H04W 72/04, H04L 25/02

(54) **LONG TRAINING FIELD SEQUENCE TRANSMISSION METHOD AND COMMUNICATION DEVICE**

(30) Priority: 24.08.2021 CN 202110976975
(71) Applicant: Huawei Technologies Co., Ltd., Shenzhen, Guangdong 518129 (CN)
(72) Inventor: LIU, Chenchen, Shenzhen, Guangdong 518129 (CN); ZHOU, Yajing, Chengdu, Sichuan 611756 (CN); ZHOU, Zhengchun, Chengdu, Sichuan 611756 (CN); YANG, Yang, Chengdu, Sichuan 611756 (CN)
(74) Representative: Maiwald GmbH
(86) International application number: PCT/CN2022/111158
(87) International publication number: WO 2023/024897

(57) **Abstract**

A long training field sequence transmission method and a communication apparatus are provided, to send an LTF sequence on a discrete RU, and reduce a PAPR. The method includes: A STA determines an LTF sequence, where the LTF sequence is denoted as a first LTF sequence, the first LTF sequence is a sequence segment that is in a total LTF sequence corresponding to a channel bandwidth and that corresponds to a first RU, N subcarriers in the channel bandwidth are in a one-to-one correspondence with N components of the total LTF sequence, the first RU is M consecutive first subcarriers in the N subcarriers, the first LTF sequence is M components in the N components, and there is a correspondence between the M consecutive first subcarriers and the M components; and the STA sends the first LTF sequence to an AP on a discrete RU, where the discrete RU includes M inconsecutive second subcarriers, and the M components of the first LTF sequence are respectively sent on the M inconsecutive second subcarriers.

## Description

### CROSS-REFERENCE TO RELATED APPLICATIONS

This application claims priority to Chinese Patent Application No. 202110976975.8, filed with the China National Intellectual Property Administration on August 24, 2021 and entitled "LONG TRAINING FIELD SEQUENCE TRANSMISSION METHOD AND COMMUNICATION APPARATUS", which is incorporated herein by reference in its entirety.

### TECHNICAL FIELD

Embodiments of this application relate to the field of communication technologies, and in particular, to a long training field sequence transmission method and a communication apparatus.

### BACKGROUND

Data traffic rapidly grows with development of a mobile internet and popularization of smart terminals. A wireless local area network (wireless local area network, WLAN) with advantages of a high rate and low costs has become one of mainstream mobile broadband access technologies. A distributed resource unit (resource unit, RU) communication manner is proposed in a wireless local area network communication system. To be specific, an access point (access point, AP) allocates an RU to a station (station, STA), and the STA discretizes a subcarrier of the RU in frequency domain, so that a discrete RU can obtain a wider transmit bandwidth.

During uplink transmission, the STA sends a reference sequence used for channel estimation to the AP. For example, the reference sequence used for the channel estimation is a long training field (long training field, LTF) sequence. The AP may perform channel estimation by using the received LTF sequence. When performing uplink transmission on the discrete RU, the STA sends the LTF sequence on the discrete RU. How to send the LTF sequence on the discrete RU is a problem that needs to be considered.

### SUMMARY

This application provides a long training field sequence transmission method and a communication apparatus, to resolve a problem of how to send an LTF sequence on a discrete RU.

According to a first aspect, an LTF sequence transmission method is provided. The method may be performed by a STA, or may be performed by a component of the STA. The method may be implemented by the following steps: The STA determines an LTF sequence, where the LTF sequence is denoted as a first LTF sequence, the first LTF sequence is a sequence segment that is in a total LTF sequence corresponding to a channel bandwidth and that corresponds to a first RU, N subcarriers in the channel bandwidth are in a one-to-one correspondence with N components of the total LTF sequence, the first RU is M consecutive first subcarriers in the N subcarriers, the first LTF sequence is M components in the N components, and there is a correspondence between the M consecutive first subcarriers and the M components; and the STA sends the first LTF sequence to an AP on a discrete RU, where the discrete RU includes M inconsecutive second subcarriers, and the M components of the first LTF sequence are respectively sent on the M inconsecutive second subcarriers. An LTF sequence corresponding to a consecutive RU is sent on the discrete RU, to help reduce a PAPR for sending the LTF sequence, and improve channel estimation performance when the LTF sequence is used for channel estimation.

In a possible design, the STA receives a trigger frame from the AP, where the trigger frame indicates the channel bandwidth and the first RU allocated to the STA. Different channel bandwidths may correspond to different total LTF sequences. The STA can obtain, by receiving the channel bandwidth, the total LTF sequence corresponding to the channel bandwidth, and can determine, by receiving the first RU, the first LTF sequence corresponding to the first RU in the total LTF sequence.

Optionally, the trigger frame received by the STA from the AP further indicates that subcarriers used for sending the first LTF sequence are inconsecutive. The trigger frame may include indication information. The indication information indicates that the subcarriers used for sending the first LTF sequence are inconsecutive, or the indication information indicates to map an allocated subcarrier of the consecutive RU to a discrete subcarrier. The STA maps a subcarrier of the first RU to the discrete subcarrier based on the indication of the trigger frame, to generate the discrete RU, or the STA transforms the first RU into the discrete RU based on a mapping relationship or a correspondence between the subcarrier of the first RU and a subcarrier of the discrete RU.

In a possible design, a bandwidth spanned and occupied by the discrete RU is a first bandwidth, and the STA does not send a signal on a subcarrier other than the M second subcarriers in the first bandwidth. Not sending the signal may also be considered as inserting a value 0. The M components of the corresponding first LTF sequence are sent on the M second subcarriers of the discrete RU, and the value 0 is inserted between two second subcarriers. Inserting the value 0 means that not signal is sent. A signal sent by another STA may exist on the subcarrier on which the STA does not send the signal.

In a possible design, the first LTF sequence is used by the AP to perform channel estimation.

According to a second aspect, a long training field sequence transmission method is provided. The method may be performed by an AP, or may be performed by a component of the AP. The method may be implemented by the following steps: The AP receives a signal from a STA on a discrete RU; and the AP performs, based on a first LTF sequence, channel estimation on the signal received on the discrete RU, where the first LTF sequence is a sequence segment that is in a total LTF sequence corresponding to a total channel bandwidth and that corresponds to a first RU, N subcarriers in the total channel bandwidth are in a one-to-one correspondence with N components of the total LTF sequence, the first RU is M consecutive first subcarriers in the N subcarriers, the first LTF sequence is M components in the N components, there is a correspondence between the M consecutive first subcarriers and the M components, the discrete RU includes M inconsecutive second subcarriers, and the M components of the first LTF sequence are respectively used to perform channel estimation on received signals on the M second subcarriers. The channel estimation is performed on the received signal on the discrete RU by using an LTF sequence corresponding to a consecutive RU, to help improve channel estimation performance.

In a possible design, the AP sends a trigger frame to the STA, where the trigger frame indicates the channel bandwidth and the first RU allocated to the STA. Different channel bandwidths may correspond to different total LTF sequences. The channel bandwidth is indicated to the STA, so that the STA can obtain the total LTF sequence corresponding to the channel bandwidth. The first RU is indicated to the STA, so that the STA can determine the first LTF sequence corresponding to the first RU in the total LTF sequence. In this way, the LTF sequence can be aligned between transmitting and receiving parties, and the channel estimation performance can be ensured.

Optionally, the trigger frame further indicates that subcarriers used for sending the first LTF sequence are inconsecutive. The indication function of the trigger frame can indicate the STA to map a subcarrier of the consecutive RU to a discrete subcarrier when the STA receives the consecutive RU, to generate the discrete RU, or transform the first RU into the discrete RU based on a mapping relationship or a correspondence between the subcarrier of the first RU and a subcarrier of the discrete RU.

According to a third aspect, a communication apparatus is provided. The communication apparatus may be a station STA, an apparatus (for example, a chip, a chip system, or a circuit) in the STA, or an apparatus that can be matched and used with the STA. In a design, the communication apparatus may include modules in a one-to-one correspondence with the described method/operations/steps/actions performed in the first aspect. The modules may be implemented by a hardware circuit, software, or a combination of the hardware circuit and the software. In a design, the communication apparatus may include a processing module and a communication module. The processing module is configured to invoke the communication module to perform a receiving function and/or a sending function. For example, the processing module is configured to determine an LTF sequence, where the LTF sequence is denoted as a first LTF sequence, the first LTF sequence is a sequence segment that is in a total LTF sequence corresponding to a channel bandwidth and that corresponds to a first RU, N subcarriers in the channel bandwidth are in a one-to-one correspondence with N components of the total LTF sequence, the first RU is M consecutive first subcarriers in the N subcarriers, the first LTF sequence is M components in the N components, and there is a correspondence between the M consecutive first subcarriers and the M components. The communication module is configured to send the first LTF sequence to an AP on a discrete RU, where the discrete RU includes M inconsecutive second subcarriers, and the M components of the first LTF sequence are respectively sent on the M inconsecutive second subcarriers.

In a possible design, the communication module is further configured to receive a trigger frame from the AP, where the trigger frame indicates the channel bandwidth and the first RU allocated to the STA. Optionally, the trigger frame received by the communication module from the AP further indicates that subcarriers used for sending the first LTF sequence are inconsecutive.

In a possible design, a bandwidth spanned and occupied by the discrete RU is a first bandwidth, and the STA does not send a signal on a subcarrier other than the M second subcarriers in the first bandwidth.

In a possible design, the first LTF sequence is used by the AP to perform channel estimation.

For beneficial effects of the third aspect and the possible designs, refer to descriptions of corresponding parts in the first aspect.

According to a fourth aspect, a communication apparatus is provided. The communication apparatus may be a station AP, an apparatus (for example, a chip, a chip system, or a circuit) in the AP, or an apparatus that can be matched and used with the AP. In a design, the communication apparatus may include modules in a one-to-one correspondence with the described method/operations/steps/actions performed in the first aspect. The modules may be implemented by a hardware circuit, software, or a combination of the hardware circuit and the software. In a design, the communication apparatus may include a processing module and a communication module. The processing module is configured to invoke the communication module to perform a receiving function and/or a sending function. For example, the communication module is configured to receive a signal from a STA on a discrete RU. The processing module is configured to perform, based on a first LTF sequence, channel estimation on the signal received on the discrete RU, where the first LTF sequence is a sequence segment that is in a total LTF sequence corresponding to a total channel bandwidth and that corresponds to a first resource unit RU, N subcarriers in the total channel bandwidth are in a one-to-one correspondence with N components of the total LTF sequence, the first RU is M consecutive first subcarriers in the N subcarriers, the first LTF sequence is M components in the N components, there is a correspondence between the M consecutive first subcarriers and the M components, the discrete RU includes M inconsecutive second subcarriers, and the M components of the first LTF sequence are respectively used to perform channel estimation on received signals on the M second subcarriers.

In a possible design, the communication module is further configured to send a trigger frame to the STA, where the trigger frame indicates the channel bandwidth and the first RU allocated to the STA.

Optionally, the trigger frame further indicates that subcarriers used for sending the first LTF sequence are inconsecutive.

For beneficial effects of the fourth aspect and the possible designs, refer to descriptions of corresponding parts in the second aspect.

According to a fifth aspect, an embodiment of this application provides a communication apparatus. The communication apparatus includes an interface circuit and a processor. The processor and the interface circuit are coupled to each other. The processor is configured to implement the method described in the first aspect or the possible designs of the first aspect through a logic circuit or by executing code instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to store instructions executed by the processor, or store input data required for running the instructions by the processor, or store data generated after the processor runs the instructions. The memory may be a physically independent unit, or may be coupled to the processor, or the processor includes the memory.

With reference to the fifth aspect, in a possible design, the processor is configured to determine an LTF sequence, where the LTF sequence is denoted as a first LTF sequence, the first LTF sequence is a sequence segment that is in a total LTF sequence corresponding to a channel bandwidth and that corresponds to a first RU, N subcarriers in the channel bandwidth are in a one-to-one correspondence with N components of the total LTF sequence, the first RU is M consecutive first subcarriers in the N subcarriers, the first LTF sequence is M components in the N components, and there is a correspondence between the M consecutive first subcarriers and the M components. The interface circuit is configured to send the first LTF sequence to an AP on a discrete RU, where the discrete RU includes M inconsecutive second subcarriers, and the M components of the first LTF sequence are respectively sent on the M inconsecutive second subcarriers.

In a possible design, the interface circuit is further configured to receive a trigger frame from the AP, where the trigger frame indicates the channel bandwidth and the first RU allocated to a STA. Optionally, the trigger frame received by the communication module from the AP further indicates that subcarriers used for sending the first LTF sequence are inconsecutive.

In a possible design, a bandwidth spanned and occupied by the discrete RU is a first bandwidth, and the STA does not send a signal on a subcarrier other than the M second subcarriers in the first bandwidth.

In a possible design, the first LTF sequence is used by the AP to perform channel estimation.

For beneficial effects of the fifth aspect and the possible designs, refer to descriptions of corresponding parts in the first aspect.

According to a sixth aspect, an embodiment of this application provides a communication apparatus. The communication apparatus includes an interface circuit and a processor. The processor and the interface circuit are coupled to each other. The processor is configured to implement the method described in the second aspect or the possible designs of the second aspect through a logic circuit or by executing code instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to store instructions executed by the processor, or store input data required for running the instructions by the processor, or store data generated after the processor runs the instructions. The memory may be a physically independent unit, or may be coupled to the processor, or the processor includes the memory.

With reference to the sixth aspect, in a possible design, the interface circuit is configured to receive a signal from a STA on a discrete RU. The processor is configured to perform, based on a first LTF sequence, channel estimation on the signal received on the discrete RU, where the first LTF sequence is a sequence segment that is in a total LTF sequence corresponding to a total channel bandwidth and that corresponds to a first resource unit RU, N subcarriers in the total channel bandwidth are in a one-to-one correspondence with N components of the total LTF sequence, the first RU is M consecutive first subcarriers in the N subcarriers, the first LTF sequence is M components in the N components, there is a correspondence between the M consecutive first subcarriers and the M components, the discrete RU includes M inconsecutive second subcarriers, and the M components of the first LTF sequence are respectively used to perform channel estimation on received signals on the M second subcarriers.

In a possible design, the communication module is further configured to send a trigger frame to the STA, where the trigger frame indicates the channel bandwidth and the first RU allocated to the STA.

Optionally, the trigger frame further indicates that subcarriers used for sending the first LTF sequence are inconsecutive.

For beneficial effects of the sixth aspect and the possible designs, refer to descriptions of corresponding parts in the second aspect.

According to a seventh aspect, an embodiment of this application provides a computer-readable storage medium. The computer-readable storage medium stores a computer program or readable instructions; and when the computer program or the readable instructions are executed by a communication apparatus, the method described in the foregoing aspects or the possible designs of the aspects is performed.

According to an eighth aspect, an embodiment of this application provides a chip system. The chip system includes a processor, and may further include a memory. The memory is used to store a program, instructions, or code. The processor is used to execute the program, instructions, or code stored in the memory, to implement the method described in the foregoing aspects or the possible designs of the aspects. The chip system may include a chip, or may include the chip and another discrete device.

According to a ninth aspect, a computer program product including instructions is provided. When the computer program product is executed by a communication apparatus, the method described in the aspects or the possible designs of the aspects is performed.

### BRIEF DESCRIPTION OF DRAWINGS

FIG. 1 is a first schematic diagram of an architecture of a WLAN system according to an embodiment of this application;
FIG. 2 is a second schematic diagram of an architecture of a WLAN system according to an embodiment of this application;
FIG. 3 is a schematic flowchart of a long training field sequence transmission method according to an embodiment of this application;
FIG. 4 is a schematic diagram of subcarrier distribution and RU distribution of 80 MHz according to an embodiment of this application;
FIG. 5 is a first schematic diagram of generating an LTF sequence of a 26-tone RU according to an embodiment of this application;
FIG. 6 is a second schematic diagram of generating an LTF sequence of a 26-tone RU according to an embodiment of this application;
FIG. 7 is a first schematic diagram of a structure of a communication apparatus according to an embodiment of this application; and
FIG. 8 is a second schematic diagram of a structure of a communication apparatus according to an embodiment of this application.

### DESCRIPTION OF EMBODIMENTS

This application provides a long training field sequence transmission method, to resolve a problem of sending an LTF sequence on a discrete RU. The method and an apparatus are conceived based on a same or similar technical concept. The method and the apparatus have similar principles for resolving a problem. Therefore, for implementation of the apparatus and the method, refer to each other. Details of repeated parts are not described again.

The long training field sequence transmission method provided in this application is applicable to a wireless local area network (wireless local area network, WLAN) system, and is applicable to an IEEE 802.11 system standard, for example, 802.11a/b/g, 802.11n, 802.11ac, 802.11ax, or a next generation of the IEEE 802.11 system standard, for example, 802.11be, or a further next generation standard. 802.11n may also be referred to as high throughput (high throughput, HT); 802.11ac may also be referred to as very high throughput (very high throughput, VHT); 802.11ax may also be referred to as high efficient (high efficient, HE) or Wi-Fi 6; 802.11be may also be referred to as extremely high throughput (extremely high throughput, EHT) or (Wi-Fi 7). Standards before HT, for example, 802.11a/b/g, and the like, are collectively referred to as non-high throughput (Non-HT). The method provided in this application may also be applicable to a wireless local area network system including but not limited to an internet of things (internet of things, IoT) network or a vehicle-to-X (Vehicle-to-X, V2X) network. The following uses an example in which embodiments of this application are applicable to a WLAN scenario.

The following describes in detail embodiments of this application with reference to accompanying drawings.

A WLAN system 100 to which embodiments of this application are applicable may include one or more APs and one or more stations (stations, STAs).

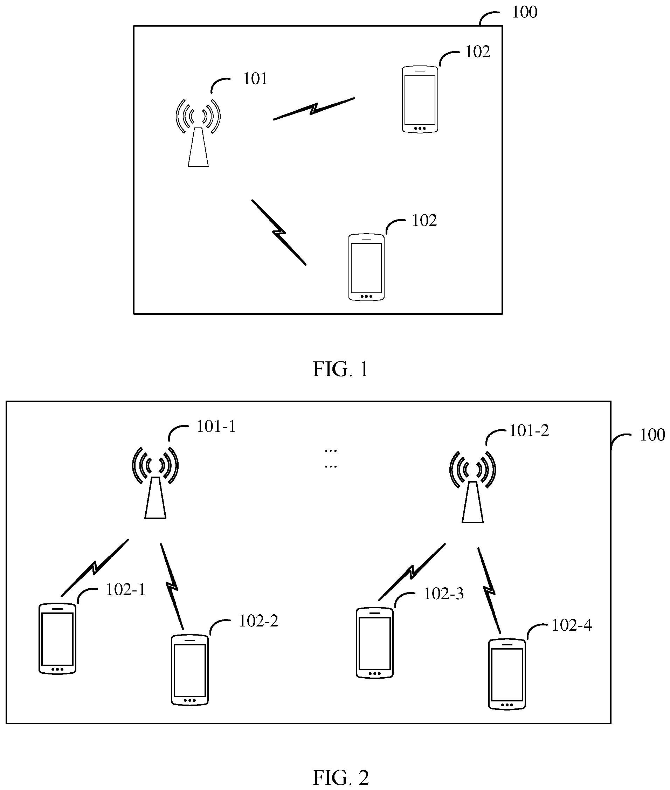

In FIG. 1, one AP 101 and two STAs are used as an example. The two STAs are represented by a STA 102-1 and a STA 102-1. The AP 101 is associated with the STA 102-1 and the STA 102-1. A STA associated with an AP can receive a radio frame sent by the AP, and can also send a radio frame to the AP. In addition, embodiments of this application are also applicable to communication between APs. For example, the APs may communicate with each other through a distributed system (distributed system, DS). Embodiments of this application are also applicable to communication between STAs.

As shown in FIG. 2, the WLAN system 100 may alternatively include a plurality of APs. FIG. 2 shows two APs, and an example in which each AP is connected to two STAs is used. It may be understood that the WLAN system may further include more APs and more STAs.

The two APs are an AP 101-1 and an AP 101-2 respectively. The AP 101-1 is connected to two STAs represented by a STA 102-1 and a STA 102-2. The AP 101-2 is connected to two STAs represented by a STA 102-3 and a STA 102-4.

The following describes an AP and a STA designed in embodiments of this application.

The AP may also be referred to as a wireless access point, a bridge, or a hotspot. The AP may access a server or a communication network. The AP is also a station. The AP is an apparatus deployed in a wireless communication network or a WLAN network to provide a wireless communication function for a station associated with the AP. The AP may be used as a hub of the WLAN system. The AP may be a base station, a router, a gateway, a repeater, a communication server, a switch, a network bridge, or the like. The base station may include a macro base station, a micro base station, a repeater station, and the like in various forms. For ease of description herein, the foregoing devices are collectively referred to as APs in embodiments of this application.

The STA may be various user terminals, user apparatuses, access apparatuses, subscriber stations, subscriber units, mobile stations, user agents, user equipment, or other names that have a wireless communication function. The user terminal may include various handheld devices, vehicle-mounted devices, wearable devices, computing devices, or other processing devices connected to a wireless modem that have the wireless communication function, and include various forms of user equipment (user equipment, UE), mobile stations (mobile stations, MSs), terminals (terminals), terminal devices (terminal equipment), portable communication devices, handheld phones, portable computing devices, entertainment devices, game devices or systems, global positioning system devices, any other suitable devices configured to perform network communication through a wireless medium, or the like. For ease of description herein, the foregoing devices are collectively referred to as STAs in embodiments of this application.

The AP/STA in FIG. 1 and FIG. 2 may be implemented by one device, or may be jointly implemented by a plurality of devices, or may be a functional module in one device. This is not specifically limited in embodiments of this application. It may be understood that the foregoing functions may be network elements in a hardware device, or may be software functions running on dedicated hardware, or may be virtualization functions instantiated on a platform (for example, a cloud platform).

In addition, the technical solutions provided in embodiments of this application are applicable to a plurality of system architectures. A network architecture and a service scenario described in embodiments of this application are intended to describe the technical solutions in embodiments of this application more clearly, and do not constitute a limitation on the technical solutions provided in embodiments of this application. Persons of ordinary skill in the art may know that: With evolution of the network architecture and emergence of new service scenarios, the technical solutions provided in embodiments of this application are also applicable to similar technical problems.

Recently, the Federal Communications Commission of the United States has defined a low power indoor (low power indoor, LPI) communication manner, to strictly limit maximum power and maximum frequency spectral density for sending. For the AP, the maximum power is 36 decibel-milliwatts (decibel-milliwatts, dBm), and the maximum power spectral density is 5 decibel-milliwatts/megahertz (decibel-milliwatts/megahertz, dBm/MHz). For the STA, the maximum power is 24 dBm, and the maximum power spectral density is -1 dBm/MHz. Power sent by a device is limited by both the maximum power and the maximum power spectral density. In other words, the power sent by the device cannot exceed a maximum power value or the maximum power spectral density. That is, transmit power per MHz cannot exceed a specified value.

Based on this, a distributed resource unit (resource unit, RU) method is proposed. The distributed RU may also be referred to as a discrete RU or another name. In embodiments of this application, the discrete RU is used as an example for description. A subcarrier of a consecutive RU in frequency domain is mapped to a discrete subcarrier. Because an RU becomes discrete in frequency domain, a transmit bandwidth is expanded. Under the limitation of the maximum power spectral density, the transmit bandwidth is expanded. This means that a larger transmit bandwidth can be obtained.

The following describes concepts of the consecutive RU and the discrete RU.

The consecutive RU is an RU including a plurality of consecutive subcarriers, or the consecutive RU is an RU including two groups of consecutive subcarriers. A plurality of subcarriers included in each group of consecutive subcarriers are consecutive. Only one or more of a guard subcarrier, a null subcarrier, or a direct current subcarrier are spaced between the two groups of subcarriers. All RUs supported in 802.11ax may be understood as consecutive RUs. The consecutive RU may also be referred to as a conventional RU. Certainly, the consecutive RU may alternatively have another name. A specific name of the consecutive RU is not limited in embodiments of this application.

In comparison with the consecutive RU, an RU that includes a plurality of subcarriers discretized in frequency domain may be referred to as the discrete RU. That is, the discrete RU includes the plurality of subcarriers, and any two subcarriers are discretized in frequency domain. The discrete RU may also include a plurality of subcarrier groups that are discretized in frequency domain. One subcarrier group includes one or more subcarriers. A plurality of subcarriers included in one subcarrier group are a plurality of consecutive subcarriers.

In uplink transmission, the STA sends a reference sequence to the AP. The reference sequence is used by the AP to perform channel estimation. For example, the reference sequence may be an LTF sequence. The LTF sequence may be an extremely high throughput long training field (extremely high throughput long training field, EHT-LTF) sequence, or may be another sequence used for the channel estimation. In embodiments of this application, an example in which the sequence used for the channel estimation is the LTF sequence is used for description.

If the STA transmits data on the discrete RU, the STA sends the LTF sequence on the discrete RU. The following describes a method for sending the LTF sequence on the discrete RU.

In embodiments of this application, a channel bandwidth is a total transmission bandwidth. Currently, 802.11ax supports the following channel bandwidth configurations: 20 MHz, 40 MHz, 80 MHz, 160 MHz, and 80+80 MHz. A difference between 160 MHz and 80+80 MHz is that 160 MHz is a consecutive frequency band, and two 80 MHz in 80+80 MHz may be separated. In 802.11be, 320 MHz is supported. Different channel bandwidths may correspond to LTF sequences. For ease of understanding, in this application, an LTF sequence corresponding to the channel bandwidth is referred to as a total LTF sequence. One channel bandwidth corresponds to one total LTF sequence. The channel bandwidth includes a plurality of consecutive subcarriers. The subcarriers have corresponding sequence numbers. For example, a channel bandwidth of 80 MHz may include subcarriers whose sequence numbers are -500 to 500. A length of the total LTF sequence may be the same as a quantity of subcarriers included in the channel bandwidth. In this way, a component of the total LTF sequence is in a one-to-one correspondence with a subcarrier sequence number of the channel bandwidth. For example, the channel bandwidth includes N subcarriers, and the N subcarriers are in a one-to-one correspondence with N components of the total LTF sequence.

An RU resource allocated by the AP to the STA is a resource of the consecutive RU. When communicating with the AP on the discrete RU, the STA needs to discretize a resource of the consecutive RU, to obtain the discrete RU. How to discretize the resource of the consecutive RU in frequency domain to obtain the discrete RU is not limited in this application. For example, a correspondence between the consecutive RU and the discrete RU may be set, and the consecutive RU is discretized into the discrete RU based on the correspondence.

In an embodiment A of a method for sending the LTF sequence on the discrete RU, components respectively corresponding to the subcarriers of the discrete RU are determined based on a total LTF sequence corresponding to the channel bandwidth, and the corresponding components are respectively sent on the subcarriers of the discrete RU, to implement sending of the LTF sequence on the discrete RU. However, a peak-to-average ratio (peak-to-average ratio, PAPR) obtained by this solution is high, and channel estimation performance is poor.

Embodiments of this application provide an LTF sequence-based communication method, to reduce a PAPR of sending an LTF sequence on a discrete RU, and improve channel estimation performance.

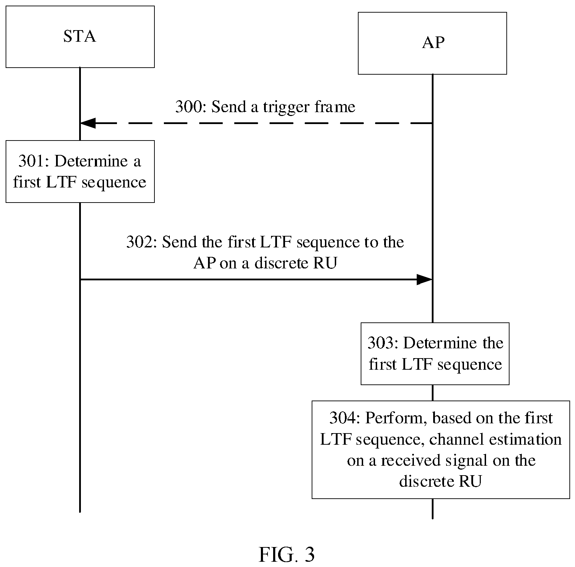

As shown in FIG. 3, the following describes a long training field sequence transmission method according to an embodiment of this application.

S301: A station STA determines a first LTF sequence.

A channel bandwidth includes N subcarriers. The N subcarriers are in a one-to-one correspondence with N components of a total LTF sequence. The channel bandwidth includes a first RU. The first RU is M consecutive subcarriers in the N subcarriers. For ease of description, the M subcarriers included in the first RU may be denoted as M first subcarriers.

The first LTF sequence is a sequence segment that is in the total LTF sequence corresponding to the channel bandwidth and that corresponds to the first RU, and there is a correspondence between the M consecutive first subcarriers and M components. That is, the first LTF sequence is a sequence including the M components corresponding to the M first subcarriers.

S302: The STA sends the first LTF sequence to an AP on a discrete RU.

The discrete RU is M inconsecutive subcarriers in the N subcarriers. The M subcarriers included in the discrete RU may be denoted as M second subcarriers. That the first LTF sequence is sent on the discrete RU is that the M components of the first LTF sequence are respectively sent on the M second subcarriers. It may be understood that the STA determines the discrete RU that has a correspondence with the first RU; or the STA maps the first LTF sequence corresponding to the first RU to the discrete RU for sending, and there is a correspondence between the discrete RU and the first RU.

Optionally, the correspondence between the first RU and the discrete RU may be predefined, or may be notified by the AP to the STA.

S303: The AP determines the first LTF sequence.

If the AP already knows the first RU allocated to the STA and the total LTF sequence corresponding to the channel bandwidth, the AP may determine the sequence segment that is in the total LTF sequence corresponding to the channel bandwidth and that corresponds to the first RU, namely, the first LTF sequence.

S304: The AP performs channel estimation on a received signal on the discrete RU based on the first LTF sequence.

The M components of the first LTF sequence are respectively used to perform channel estimation on received signals on the M second subcarriers.

Optionally, the AP may determine the discrete RU based on the correspondence between the first RU and the discrete RU. The AP and the STA may determine the discrete RU in a same manner. A specific method for determining the discrete RU by the STA and the AP is not limited in this embodiment of this application.

The STA sends the M components of the first LTF sequence on the M second subcarriers. The AP separately receives M reference signals on the M second subcarriers, and the reference signals are the received signals in S304. The M reference signals are signals obtained after channel noise interference is performed on the M components of the first LTF sequence. The AP may separately perform channel estimation on the M second subcarriers based on the M components of the first LTF sequence and the received M reference signals that are already known in advance, to obtain a channel estimation result of the M second subcarriers. The STA may send data on the M second subcarriers. The data may be divided into M data components. The M data components are respectively sent on the M second subcarriers. The AP separately receives the M data components on the M second subcarriers. The AP may parse the M data components based on the channel estimation result of the M second subcarriers, to obtain a correct parsing result.

It may be understood that the AP may allocate RU resources to a plurality of STAs, and may also receive signals of the plurality of STAs. For a solution related to each of the plurality of STAs, refer to the STA solution described in this embodiment of this application.

According to the method provided in the embodiment in FIG. 3, an LTF sequence corresponding to a consecutive RU is sent on the discrete RU. In this way, a PAPR can be reduced, and channel estimation performance can be improved.

The following describes some optional implementations of the embodiment in FIG. 3.

Before S301, the method may further include S300.

S300: The AP sends a trigger frame (trigger frame) to the STA, and correspondingly the STA receives the trigger frame from the AP.

The trigger frame indicates the channel bandwidth and the first RU allocated to the STA.

It may be understood that when there is a plurality of STAs under the AP, the AP sends trigger frames to the plurality of STAs, and includes indication information of an RU allocated to each STA in the trigger frames that are sent to the STA. For example, multi-user transmission of 802.11ax and 802.11be is based on an orthogonal frequency division multiple access (orthogonal frequency division multiple access, OFDMA) technology, to achieve an objective of improving an average system throughput in a high-density scenario. A user is distinguished based on an RU. In this mode, user data is carried on each RU. Therefore, in terms of a total time-frequency resource, a plurality of users may send the data at the same time on each time slice. In an uplink transmission (uplink-OFDMA, UL-OFDMA) or a downlink transmission (downlink-OFDMA, DL-OFDMA) process, the trigger frame needs to be used to implement multi-user communication and exchange of scheduling information. The trigger frame sent by the AP to the STA may include the channel bandwidth and RU resource allocation information.

The STA may determine, based on the channel bandwidth indicated by the received trigger frame, the total LTF sequence corresponding to the channel bandwidth. The STA may determine the first RU allocated by the AP to the STA based on the RU resource allocation information indicated by the received trigger frame.

Optionally, the trigger frame sent by the AP to the STA may further indicate that subcarriers of the first LTF sequence are inconsecutive, or the trigger frame may further indicate the AP to send the first LTF sequence on inconsecutive subcarriers. The STA discretizes the consecutive RU (namely, the first RU) in frequency domain based on an indication of the trigger frame, to obtain the discrete RU.

The following describes a relationship between the discrete RU and the channel bandwidth. The channel bandwidth may also be referred to as a carrier bandwidth. A bandwidth spanned and occupied by the discrete RU is denoted as a first bandwidth. The channel bandwidth includes the first bandwidth. The bandwidth spanned and occupied by the discrete RU may be understood as a bandwidth spanned and occupied by the first subcarrier to the last subcarrier of the discrete RU. In S302, the STA sends the first LTF sequence to the AP on the discrete RU. Optionally, the STA sends the first LTF sequence on M discrete second subcarriers in the first bandwidth, and does not send a signal on a subcarrier other than the M second subcarriers in the first bandwidth. It may be understood that, in a multi-user transmission scenario, another STA may send a signal on the subcarrier on which the STA does not send the signal.

The following further describes the method provided in this embodiment of this application by using an example in which the channel bandwidth is 80 MHz.

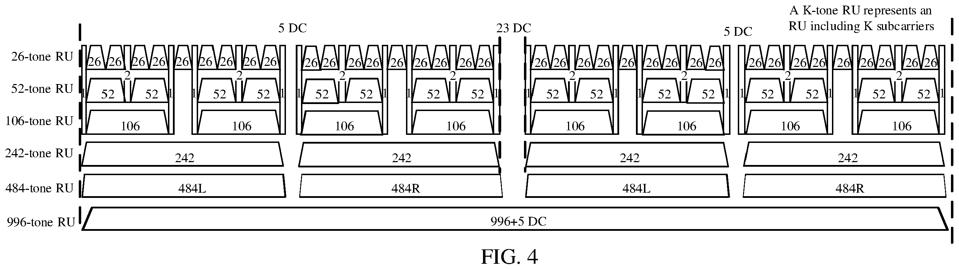

In this embodiment of this application, an RU including K subcarriers may be referred to as a K-tone RU. As shown in FIG. 4, an example in which the channel bandwidth is 80 MHz is used. The entire bandwidth may include an entire 996-tone RU, or may include two 484-tone RUs, or may include four 242-tone RUs, or may include various combinations such as a 26-tone RU, a 52-tone RU, a 106-tone RU, or the like. The leftmost vertical line in FIG. 4 corresponds to a lowest frequency of the channel bandwidth, and the rightmost vertical line in FIG. 4 corresponds to a highest frequency of the channel bandwidth. 484L and 484R represent a left half part and a right half part of the 484-tone RU, separately include 242 subcarriers, and are another schematic manner of 484+5 direct current (direct current, DC) subcarriers. 5 DC represents five subcarriers in the entire channel bandwidth. The five subcarriers are easily interfered by a direct current signal of a device, and are generally not used for data transmission. From left to right, the 26-tone RU may be labeled as: 1^{st}, 2^{nd}, ..., and 36^{th}. Similarly, the 52-tone RU may be labeled as: 1^{st}, 2^{nd}, ..., and 16^{th}. The 106-tone RU may be labeled as: 1^{st}, 2^{nd}, ..., and 8^{th}. The 242-tone RU may be labeled as: 1^{st}, 2^{nd}, 3^{rd}, and 4^{th}. The 484-tone RU may be labeled as: 1^{st} and 2^{nd}.

A discrete RU is obtained after a consecutive RU is discretized. In a possible discretization manner, after a subcarrier of the consecutive RU is mapped to a discrete subcarrier to generate the discrete RU, a spacing distance between adjacent subcarriers of the discrete RU may be as follows: A distance between adjacent subcarriers of the 26-tone RU is 19, that is, 18 0s are inserted between two subcarriers. A distance between adjacent subcarriers of the 52-tone RU is 10, that is, nine 0s are inserted between two subcarriers. A distance between adjacent subcarriers of the 106-tone RU is 5, that is, four 0s are inserted between two subcarriers. A distance between adjacent subcarriers of a 2422-tone RU is 2, that is, one 0 is inserted between two subcarriers. A distance between adjacent subcarriers of the 484-tone RU is 2, that is, one 0 is inserted between two subcarriers. 0 is inserted between two second subcarriers. Inserting 0 means that no signal is sent. A subcarrier on which no signal is sent may be referred to as a "null" subcarrier.

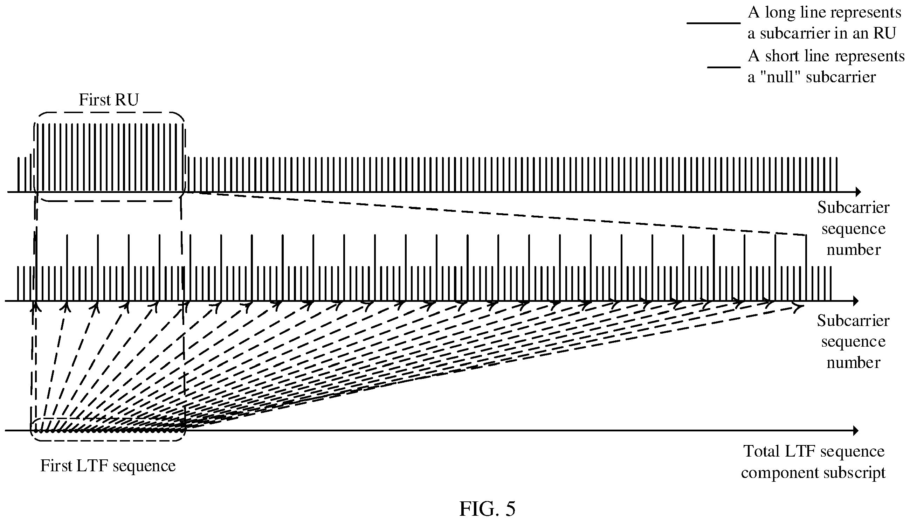

For example, the first RU allocated by the AP to the STA is the 3^{rd} consecutive 26-tone RU. FIG. 5 shows a relationship between the consecutive RU and the discrete RU, and a manner of mapping the first LTF on the discrete RU. A quantity N of subcarriers included in the channel bandwidth of 80 MHz is 1001. Sequence numbers of the N subcarriers are [-500: +500] respectively. In an x^{th} consecutive 26-tone RU, a discretized discrete RU is located at [(-500+k-1): 13: (-175+k-1)]. For example, in the 1^{st} consecutive 26-tone RU, a discretized discrete RU is located at [-500: 13 : -175], to be specific, -500, -487, -474, -461, -448, -435, -422, -409, - 396, -383, -370, -357, -344, -331, -318, -305, -292, -279, -266, -253, -240, -227, -214, -201, -188, and -175. The first RU is a consecutive RU. The first RU includes 26 consecutive subcarriers. For example, the first RU includes subcarriers whose sequence numbers are [-445: -420]. Correspondingly, the total LTF sequence includes 1001 components. Component subscripts may be represented by [-500: -500]. The components whose subscripts are [-500: -500] are in a one-to-one correspondence with subcarriers whose sequence numbers are [-500: -500]. The first LTF sequence is a sequence including M components whose subscripts are [-445: -420]. The discrete RU is an RU of the first RU that is discretized in frequency domain. For example, the discrete RU may include 26 subcarriers whose sequence numbers are [(-500+3-1): 13: (-175+3-1)], to be specific, the sequence numbers of the 26 subcarriers of the discrete RU are -498, -485, -472, - 459, -446, -433, -420, -407, -394, -381, -368, -355, -342, -329, -316, -303, -290, -277, -264, -251, -238, -225, -212, -199, -186, and -173. 26 components whose subscripts are [-445: -420] are respectively sent on 26 subcarriers whose sequence numbers are [(-500+3-1): 13: (-175+3-1)].

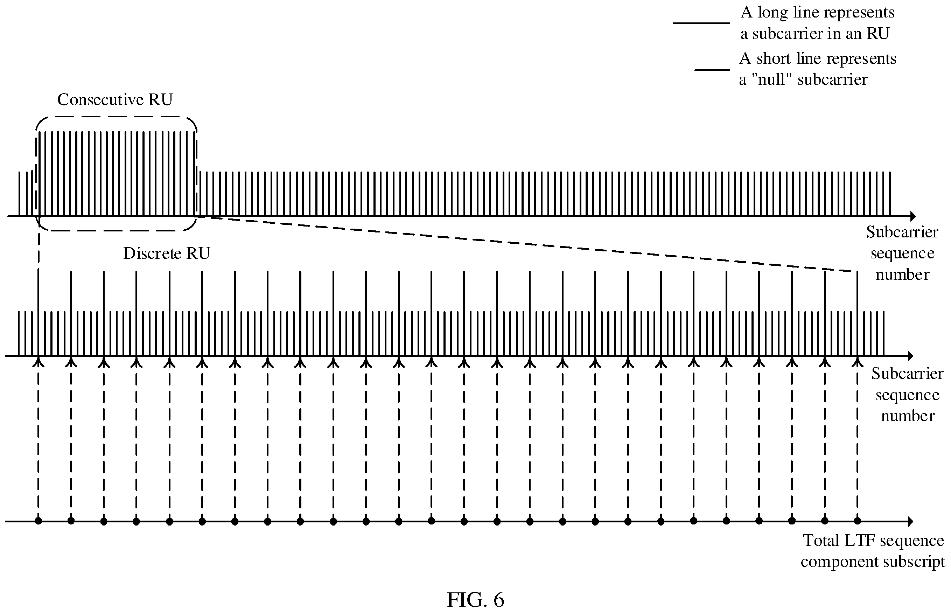

The embodiment A of the method for sending the LTF sequence on the discrete RU is provided above. Components respectively corresponding to the subcarriers of the discrete RU are determined based on the total LTF sequence corresponding to the channel bandwidth, and the corresponding components are respectively sent on the subcarriers of the discrete RU, to implement sending of the LTF sequence on the discrete RU. According to the embodiment A, in comparison with the manner in the embodiment shown in FIG. 5, as shown in FIG. 6, the consecutive RU allocated by the AP to the STA includes the subcarriers whose sequence numbers are [-445: -420]. The consecutive RU is discretized into the discrete RU in frequency domain. The discrete RU includes the 26 subcarriers whose sequence numbers are [(-500+3-1): 13: (-175+3-1)]. A second LTF sequence is sent on the discrete RU. Subscripts of 26 components of the second LTF sequence are in a one-to-one correspondence with the sequence numbers of the 26 subcarriers of the discrete RU. The second LTF sequence is a sequence including components whose subscripts are [(-500+3-1): 13: (-175+3-1)] in the total LTF sequence.

In comparison with the embodiment in FIG. 6, in the embodiment in FIG. 5, a lower PAPR can be obtained. Table 1 shows a comparison between PAPRs of LTF sequences with a bandwidth of 80MHz in the method in the embodiment in FIG. 3 and the method in the embodiment A.

**Table 1**

| | 26-tone RU (inserting 18 0s) | 52-tone RU (inserting nine 0s) | 106-tone RU (inserting four 0s) | 242-tone RU (inserting one 0) | 484-tone RU (inserting one 0) |
|---|---|---|---|---|---|
| Embodiment in FIG. 3 | 5.85 dB | 7.08 dB | 6.71 dB | 5.49 dB | 6.93 dB |
| Embodiment A | 8.19 dB | 9.68 dB | 8.65 dB | 8.82 dB | 9.21 dB |

It should be noted that examples in various application scenarios in this application merely show some possible implementations, to help better understand and describe the method in this application. Persons skilled in the art may obtain examples of some evolved forms based on the reference signal indication method provided in this application.

In the foregoing embodiments of this application, the method provided in embodiments of this application is described separately from perspectives of an AP, a STA, and interaction between the AP and the STA. To implement the functions in the method provided in embodiments of this application, the STA and the AP may include a hardware structure and/or a software module, to implement the foregoing functions through the hardware structure, the software module, or a combination of the hardware structure and the software module. Whether a function in the foregoing functions is performed in a manner of the hardware structure, the software module, or both the hardware structure and the software module depends on specific applications and design constraint conditions of the technical solutions.

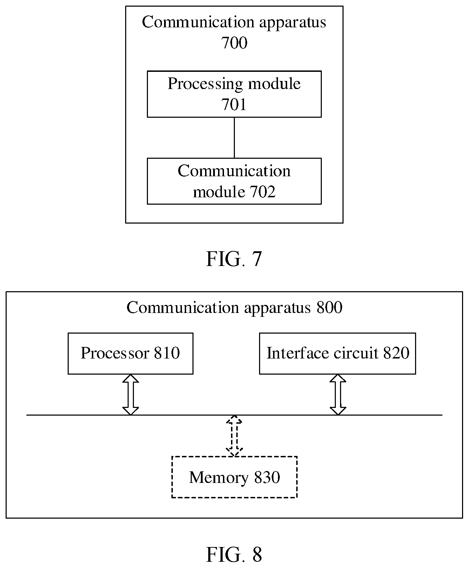

As shown in FIG. 7, based on a same technical concept, an embodiment of this application further provides a communication apparatus 700. The communication apparatus 700 may be a STA or an AP, or may be an apparatus in the STA or the AP, or an apparatus that can be matched and used with the STA or the AP. In a design, the communication apparatus 700 may include modules in a one-to-one correspondence with the method/operations/steps/actions performed by the STA or the AP in the foregoing method embodiments. The modules may be implemented by a hardware circuit, software, or a combination of the hardware circuit and the software. In a design, the communication apparatus may include a processing module 701 and a communication module 702. The processing module 701 is configured to invoke the communication module 702 to perform a receiving function and/or a sending function.

When being configured to perform the method performed by the STA, the processing module 701 is configured to determine a first LTF sequence, and the communication module 702 is configured to send the first LTF sequence to the AP on a discrete RU.

When being configured to perform the method performed by the AP, the communication module 702 is configured to receive a signal from the STA on the discrete RU, and the processing module 701 is configured to perform, based on the first LTF sequence, channel estimation on the signal received on the discrete RU. For more detailed descriptions of the foregoing processing module 701 and the communication module 702, directly refer to related descriptions in the method embodiment shown in FIG. 3. Details are not described herein.

FIG. 8 shows a communication apparatus 800 according to an embodiment of this application. The communication apparatus 800 is configured to implement a function of a STA or an AP in the foregoing method. When implementing the function of the STA, the communication apparatus may be the STA, or may be an apparatus in the STA, or an apparatus that can be matched and used with the STA. When implementing the function of the AP, the apparatus may be the AP, or may be an apparatus in the AP, or an apparatus that can be matched and used with the AP. The communication apparatus may be a chip system. In this embodiment of this application, the chip system may include a chip, or may include the chip and another discrete device. As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions executed by the processor 810, or store input data required for running the instructions by the processor 810, or store data generated after the processor 810 runs the instructions.

When the communication apparatus 800 is configured to implement the method shown in FIG. 3, the processor 810 is configured to implement a function of the foregoing processing module 701, and the interface circuit 820 is configured to implement a function of the foregoing communication module 702.

When the communication apparatus 700 and the communication apparatus 800 are specifically chips or chip systems, the communication module 702 and the interface circuit 820 may output or receive baseband signals. When the communication apparatus 700 and the communication apparatus 800 are specifically devices, the communication module 702 and the interface circuit 820 may output or receive radio frequency signals. In embodiments of this application, the processor may be a general-purpose processor, a digital signal processor, an application specific integrated circuit, a field programmable gate array or another programmable logic device, a discrete gate or a transistor logic device, or a discrete hardware component, and may implement or perform the method, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

In embodiments of this application, the memory 830 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

Some or all of the operations and functions performed by the STA or some or all of the operations and functions performed by the AP described in the foregoing method embodiments of this application may be implemented through a chip or an integrated circuit.

To implement a function of the communication apparatus in FIG. 7 or FIG. 8, an embodiment of this application further provides a chip. The chip includes a processor, configured to support the communication apparatus in implementing functions related to the STA or the AP in the foregoing method embodiments. In a possible design, the chip is connected to a memory or the chip includes the memory. The memory is configured to store program instructions and data that are necessary for the communication apparatus.

An embodiment of this application provides a computer-readable storage medium. The computer-readable storage medium stores a computer program. The computer program includes instructions used to perform the foregoing method embodiments.

An embodiment of this application provides a computer program product including instructions. When the computer program product is run on a computer, the foregoing method embodiments are performed.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists. A and B may be singular or plural.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although preferred embodiments of this application are described, persons skilled in the art can make changes and modifications to these embodiments after they learn of a basic inventive concept. Therefore, the appended claims are intended to be construed as including the preferred embodiments and all changes and modifications that fall within the scope of this application.

Clearly, persons skilled in the art can make various modifications and variations to embodiments of this application without departing from the spirit and scope of embodiments of this application. In this way, this application is intended to cover these modifications and variations provided that these modifications and variations of embodiments of this application fall within the scope of protection defined by the following claims of this application and their equivalent technologies.

## Claims

1. A long training field sequence transmission method, comprising:
determining, by a station STA, a first long training field LTF sequence, wherein the first LTF sequence is a sequence segment that is in a total LTF sequence corresponding to a channel bandwidth and that corresponds to a first resource unit RU, N subcarriers in the channel bandwidth are in a one-to-one correspondence with N components of the total LTF sequence, the first RU is M consecutive first subcarriers in the N subcarriers, the first LTF sequence is M components in the N components, and there is a correspondence between the M consecutive first subcarriers and the M components; and
sending, by the STA, the first LTF sequence to an access point AP on a discrete RU, wherein the discrete RU comprises M inconsecutive second subcarriers, and the M components of the first LTF sequence are respectively sent on the M inconsecutive second subcarriers.

2. The method according to claim 1, wherein the method further comprises:
receiving, by the STA, a trigger frame from the AP, wherein the trigger frame indicates the channel bandwidth and the first RU allocated to the STA.

3. The method according to claim 2, wherein the trigger frame further indicates that subcarriers used for sending the first LTF sequence are inconsecutive.

4. The method according to any one of claims 1 to 3, wherein a bandwidth spanned and occupied by the discrete RU is a first bandwidth, and the STA does not send a signal on a subcarrier other than the M second subcarriers in the first bandwidth.

5. The method according to any one of claims 1 to 4, wherein the first LTF sequence is used by the AP to perform channel estimation.

6. A long training field sequence transmission method, comprising:
receiving, by an access point AP, a signal from a STA on a discrete RU; and
performing, by the AP based on a first LTF sequence, channel estimation on the signal received on the discrete RU, wherein the first LTF sequence is a sequence segment that is in a sequence corresponding to a total channel bandwidth and that corresponds to a first resource unit RU, N subcarriers in the total channel bandwidth are in a one-to-one correspondence with N components, the first RU is M consecutive first subcarriers in the N subcarriers, the first LTF sequence is M components in the N components, there is a correspondence between the M consecutive first subcarriers and the M components, the discrete RU comprises M inconsecutive second subcarriers, and the M components of the first LTF sequence are respectively used to perform channel estimation on received signals on the M second subcarriers.

7. The method according to claim 6, wherein the method further comprises:
sending, by the AP, a trigger frame to the STA, wherein the trigger frame indicates the channel bandwidth and the first RU allocated to the STA.

8. The method according to claim 7, wherein the trigger frame further indicates that subcarriers used for sending the first LTF sequence are inconsecutive.

9. A communication apparatus, comprising:
a processing module, wherein the processing module is configured to determine a first long training field LTF sequence, and the first LTF sequence is a sequence segment that is in a total LTF sequence corresponding to a channel bandwidth and that corresponds to a first resource unit RU, N subcarriers in the channel bandwidth are in a one-to-one correspondence with N components of the total LTF sequence, the first RU is M consecutive first subcarriers in the N subcarriers, the first LTF sequence is M components in the N components, and there is a correspondence between the M consecutive first subcarriers and the M components; and
a communication module, wherein the communication module is configured to send the first LTF sequence to an access point AP on a discrete RU, wherein the discrete RU comprises M inconsecutive second subcarriers, and the M components of the first LTF sequence are respectively sent on the M inconsecutive second subcarriers.

10. The apparatus according to claim 9, wherein the communication module is further configured to:
receive a trigger frame from the AP, wherein the trigger frame indicates the channel bandwidth and the first RU allocated to a station STA.

11. The apparatus according to claim 10, wherein the trigger frame further indicates that subcarriers used for sending the first LTF sequence are inconsecutive.

12. The apparatus according to any one of claims 9 to 11, wherein a bandwidth spanned and occupied by the discrete RU is a first bandwidth, and the STA does not send a signal on a subcarrier other than the M second subcarriers in the first bandwidth.

13. The apparatus according to any one of claims 9 to 12, wherein the first LTF sequence is used by the AP to perform channel estimation.

14. A long training field sequence transmission apparatus, comprising:
a communication module, wherein the communication module is configured to receive a signal from a STA on a discrete RU; and
a processing module, wherein the processing module is configured to perform channel estimation on the signal received on the discrete RU based on a first LTF sequence, wherein the first LTF sequence is a sequence segment that is in a sequence corresponding to a total channel bandwidth and that corresponds to a first resource unit RU, N subcarriers in the total channel bandwidth are in a one-to-one correspondence with N components, the first RU is M consecutive first subcarriers in the N subcarriers, the first LTF sequence is M components in the N components, there is a correspondence between the M consecutive first subcarriers and the M components, the discrete RU comprises M inconsecutive second subcarriers, and the M components of the first LTF sequence are respectively used to perform channel estimation on received signals on the M second subcarriers.

15. The apparatus according to claim 14, wherein the communication module is further configured to:
send a trigger frame to the STA, wherein the trigger frame indicates the channel bandwidth and the first RU allocated to the STA.

16. The apparatus according to claim 15, wherein the trigger frame further indicates that subcarriers used for sending the first LTF sequence are inconsecutive.

17. A communication apparatus, comprising a module configured to perform the method according to any one of claims 1 to 5, or comprising a module configured to perform the method according to any one of claims 6 to 8.

18. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, through a logic circuit or by executing code instructions, the method according to any one of claims 1 to 5, or the method according to any one of claims 6 to 8.

19. A computer-readable storage medium, wherein the computer-readable storage medium stores computer-readable instructions; and when the computer-readable instructions are run on a communication apparatus, the method according to any one of claims 1 to 5 is implemented, or the method according to any one of claims 6 to 8 is implemented.

20. A computer program product, wherein the computer program product comprises instructions; and when the computer-readable instructions are run on a communication apparatus, the method according to any one of claims 1 to 5 is implemented, or the method according to any one of claims 6 to 8 is implemented.

21. A chip, wherein the chip is coupled to a memory, and is configured to read and execute program instructions stored in the memory, to perform the method according to any one of claims 1 to 5, or perform the method according to any one of claims 6 to 8.

22. A communication system, wherein the system comprises an apparatus configured to perform the method according to any one of claims 1 to 5 and an apparatus configured to perform the method according to any one of claims 6 to 8.
